# EUROPEAN PATENT APPLICATION

(11) **EP 2 501 099 A1**
(43) Date of publication of application: **19.09.2012**
(21) Application number: 11158614.5
(22) Date of filing: 17.03.2011
(51) Int. Cl.: H04L 29/06

(54) **Method and system for detecting malicious web content**

(71) Applicant: Skunk Worx B.V., 7553 AE Hengelo (NL)
(72) Inventor: Loman, Mark Willem, 7551 AP Hengelo (NL); Loman, Erik Jan, 7558 TB Hengelo (NL); Van Hillo, Victor Marinus Johann Simon, 7491 CK Delden (NL)
(74) Representative: De Vries & Metman

(57) **Abstract**

A method for determining whether web content intended for transmission from a second device to a first device via a routing device comprises malware is proposed. The method, to be carried out by the routing device, includes receiving at least a part of the web content from the second device, providing to an antivirus service a representation of N bits of the received part of the web content, and receiving, from the antivirus service, test information based on the representation of the N bits provided by the router and indicating whether the web content may comprise malware. An appropriate representation of the N bits of web content serves as a "fingerprint," sufficiently identifying the entire piece of the web content for the purpose of determining whether or not this piece of web content may contain malware.

## Description

### FIELD OF THE INVENTION

The present invention relates to detecting viruses and other malware in web content.

### BACKGROUND

Consumer-grade home internet gateways (routers) are, because of cost, designed and built with just the bare necessities to transfer network data packets between the internet and a local (wired and/or wireless) network. Due to the low amount of available memory and processing resources in such devices, it is a challenge to perform additional computing tasks such as virus scanning, which traditionally require significant resources In terms of device memory and processing power.

Conventional virus scanning techniques employ signature-based detection schemes that require antivirus software to compare the contents of a (downloaded) file to a dictionary of virus signatures. Typically, the entire file is downloaded and searched for malicious content. This has several disadvantages. Virus scanning is not performed or finished until the whole file has been downloaded, which results in slowed network performance. In addition, virus scanning requires a temporary space to scan files for virus signatures, which limits the download size of the file. Introducing this type of virus scanning on a low resource home router would affect the overall performance of the router, resulting in slowed network performance and ultimately poor user experience.

Furthermore, signature-based detection schemes involve searching for known patterns of data within files. However, it may be possible for a computer to become infected with new malware for which no signature is yet known. Virus authors release more and more viruses on the internet each day so it is essential to frequently update virus checkers to protect against new viruses (so-called "zero-day" viruses). Distributing virus signature updates every few hours potentially affects the availability, reliability and unintentionally network performance and user experience.

Being able to combine multiple antivirus vendors, thus their research teams efforts and technologies, could increase zero-day virus detection. However, combining multiple traditional antivirus engines on one home computer is a challenge. Combining them on a consumer-grade router is even a bigger challenge when considering the required resources, engine inter-compatibility and periodic signature updates, which affect router performance and ultimately the end-user experience.

### SUMMARY OF THE INVENTION

It is an object of the invention to provide a method and a system for detecting viruses and other malware that could improve on at least some of the challenges described above,

Embodiments of the present invention are adapted to operate in an environment including at least a first device adapted to be communicatively connected to a routing device via a first network and a second device adapted to be communicatively connected to the routing device via a second network, where the routing device is also adapted to be communicatively connected to an antivirus service.

The term "routing device" is used to describe any integrated circuit configured to implement functionality described herein. Such an integrated circuit could be included within a conventional consumer-grade router such as e.g. Sitecom, Linksys and Netgear but can also be included within different devices such as e.g. [a chip within] a smartphone or a tablet computer. The following exemplary description is provided in the context of a consumer-based router. However, persons skilled in the art will recognize that the teachings of the invention can be carried out by any other suitable device, such as any properly configured integrated circuit.

In one aspect of the invention, a method for determining whether web content intended for transmission between the first device and the second device via the router may comprise malware is provided. As used herein, the term "malware" is used to describe any malicious software agent that can be over a network such as e.g. a virus, worm, Trojan horse, rootkit, backdoor, spyware, hot or other annoying, Intrusive or hostile software designed to access a computer system without the owner's informed consent. The web content may e.g. comprise a web page or a file obtainable via the internet. The method is intended to be carried out by the router. The method includes the step of receiving at least a part of web content from the second device and, optionally, either an explicit or implicit indication that the web content is intended for transmission by the router to the first device. The method also includes steps of providing to the antivirus service at least a representation of N bits of the received part of the web content and receiving from the antivirus service test information indicating whether the web content may comprise malware. The test information is based on the representation of the N bits provided by the router.

The invention is based on the recognition that an appropriate representation of N bits of a piece of web content (e.g. a web page), such as e.g. a hash of the first 64 kilobytes of a web page, may act as a "fingerprint," sufficiently identifying the entire piece of the web content for the purpose of determining whether or not this piece of web content may contain malicious objects such as viruses or other malware. Obtaining such a representation does not require significant resources in terms of memory and processing power and is, therefore, possible to implement in a consumer-grade router in a local network. Providing the obtained fingerprint of the web content from the router to a specialized antivirus service, preferably a cloud-based service, allows utilizing large and constantly updating libraries of representations of known viruses and other malicious objects available to such a service to test whether the web content may comprise malware. In case a particular fingerprint is not yet known to the antivirus service, the service may obtain a part or the whole piece of the web content and check it against one or more antivirus programs, possibly from multiple vendors, to determine whether the web content may comprise malware and then provide the result of this check to the router. In this manner, malware detection can be implemented in a consumer-grade router before malicious content enters a local network or before malicious content is sent out from the local network.

As used herein, the phrase "web content is intended for transmission" and its derivatives are used to indicate that, while the web content may be intended to be transmitted to a particular recipient device, it may or may not actually be transmitted to that device. As described in greater detail below, the router is configured to receive such web content and check whether the web content may comprise malware. In one embodiment, based on the result of the check, the router may be configured to block the transmission, if it is determined that the web content may comprise malicious objects, and only transmit the web content to the intended recipient device if no such determination has been made. In other embodiments, however, the router may be configured to transmit the web content to the intended recipient device while the check is made, without waiting for the result of the check.

Furthermore, as used herein, the phrases "the web content may comprise malware," "the web content seems to comprise malware" and their derivatives mean that the determination of whether or not the web content comprises malware may be probabilistic, rather than deterministic. Whether such determination is probabilistic or deterministic would depend on the type of algorithm implemented in an antivirus service. For example, based on the received representation of the N bits of the web content the antivirus service may issue a conclusion that there is 90 or more percent chance that the web content contains malware. Of course, in other embodiments, the determination of whether the web content comprises malware may be 100 percent certain.

In an embodiment, when the test information indicates that the web content does not comprise malware, the method may further include the step of transmitting the web content to the first device, and/or, when the test information indicates that the web content may comprise malware, the method may further include the step of blocking transmission of the web content to the first device. As a result, only web content that does not comprise malware is allowed to reach the first device.

In an embodiment, the representation of the N bits comprises a representation of the first N bits of the web contend, thus eliminating the need to download the entire web content because modifications of e.g. safe files may typically already be visible in the first N bits.

In an embodiment, the representation of the N bits comprises a hash of the N bits. A hash is a preferable representation because it creates a unique representation for a certain bit sequence (the sequence of N bits).

In an embodiment, the method may include buffering the N bits of the received part of the web content at the router. Buffering the N bits at the router is preferable to buffering these bits at the first device or at the antivirus service. Buffering at the first device would require changes to the first device, while buffering at the antivirus service would demand additional resources at the antivirus service, especially as the number of users scales up. In contrast, buffering at the router does not require any changes to the first device of the user and also implies that when the number of users scales up, the number of necessary (and available) buffers also will automatically scale up since new users will have their own routers.

In an embodiment, the representation of the N bits is provided to the antivirus service and/or the test information is received from the antivirus service using User Datagram Protocol (UDP). Using the UDP for exchanging data between the router and the antivirus service allows having minimal processing and memory resources in the router since UDP requires less overhead in terms of processing power and memory, as compared with some other data exchange protocols.

In an embodiment, the representation of the N bits is provided to the antivirus service and/or the test information is received from the antivirus service encrypted, authenticated, or both encrypted and authenticated, providing security to the communication between the router and the antivirus service.

In an embodiment, the router is configured to support HTTP―pipelining and connection pre-allocation to improve latency in loading of the web content.

In an embodiment, the router starts receiving the web content from the second device in response to the router receiving a request for the web content from the first device and re-directing the request to the second device. Such an embodiment is particularly advantageous when the first network comprises a local network, the second network comprises an external network, the second device comprises a web server, and the first device comprises a device within the local network capable of receiving the web content from the web server. In a further embodiment, when the test information indicates that the web content may comprise malware, the router may be configured to provide an indication to the first device that transmission of the web content has been blocked.

In an embodiment when the router starts receiving the web content from the second device in response to the router receiving a request for the web content from the first device and re-directing the request to the second device, the method may further include the router providing to the antivirus service, a part of the request, such as e.g. a hostname and/or a Uniform Resource Identifier (URI) associated with the web content. In such an embodiment, the test information may be based on the part of the request provided to the antivirus service by the router because the antivirus service may be adapted to check the web content against one or more antivirus packages. This embodiment may be particularly advantageous when the fingerprint of the web content is not known to the antivirus service.

In an embodiment, the method may further include the router storing at least a part of the request and at least a part of the test information associated with the request. Such an embodiment may allow reducing the number of communications between the router and the antivirus service, as router may further be configured to check whether the test information has already been obtained and is stored in the router for a particular request for web content, thus possibly eliminating the need to send the fingerprint of the web content to the antivirus service and wait for the response again.

In an embodiment, the second network may comprise a local network, the first network may comprise an external network, and the second device may comprise a device within the local network capable of transmitting the web content to the first device. This embodiment is particularly advantageous for detecting that a device within a local network sends out malicious content to devices outside of the local network, possibly indicating that the device has been compromised. In such an embodiment, when the test information indicates that the web content may comprise malware, the router may be configured to provide an indication to the second device that transmission of the web content is blocked and, possibly, provide a further explanation of why it has been blocked. In this manner, a user of the second device may become aware that the device has been compromised.

According to another aspect of the invention a routing device is proposed. The routing device, which could be implemented in hardware, in software, or a combination of both, is adapted to carry out a method having one or more of the above mentioned features.

Still another aspect of the invention relates to a, preferably non-transitory, computer program for performing the method having one or more of the above mentioned features. This advantageously enables at least some of the routing device functionality to be implemented in software.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 shows an environment for enabling detection of malicious web content intended for transmission between different devices, according to one embodiment of the present invention;
Fig.2 shows a flow diagram of method steps for enabling detection of malicious web content intended to enter the first network, according to one embodiment of the present invention; and
Fig. 3 shows a block diagram of a router, according to one embodiment of the present invention.

### DETAILED DESCRIPTION OF THE DRAWINGS

The invention involves introduction of a lightweight transparent web proxy server in a consumer-grade router that checks the web content that may be relayed through the router, thus providing security against viruses and other malware.

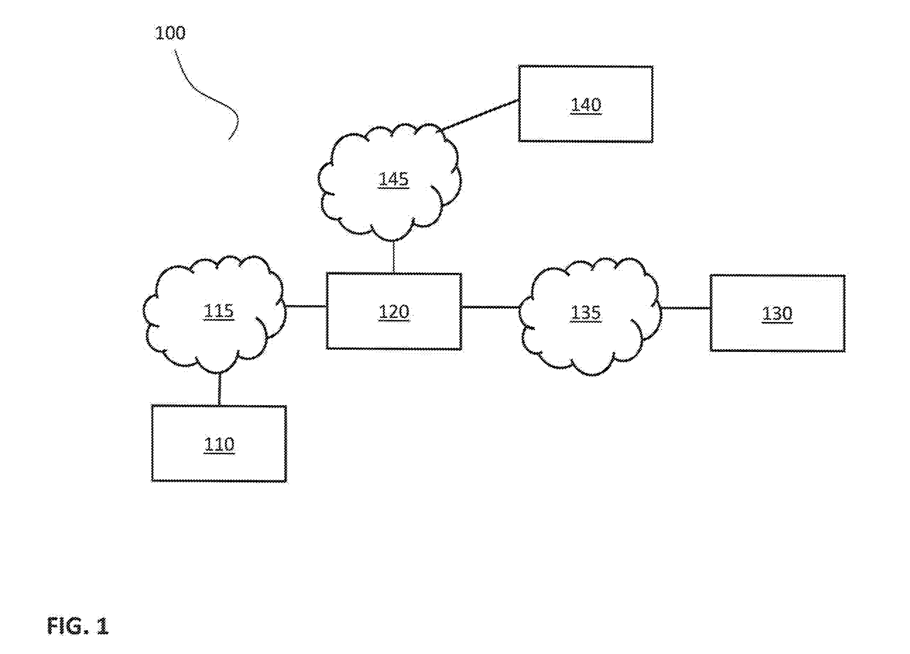

Hereto a system for enabling detection of malicious web content intended for transmission between different devices is proposed, such as e.g. shown in Fig.1.

As shown in Fig.1, a system 100 includes at least a first device 110 connected to a router 120 via a first network 115. The system 100 also includes a second device 130 connected to the router 120 via a second network 135.

The router 120 is adapted to function as a proxy that acts as an intermediary between the first device 110 and the second device 130. As used herein, the term "proxy" describes a device functionality of acting as an intermediary between one or more of the devices within the first network 115 on the one hand and one or more of the devices outside of the first network 115 on the other hand (such as e.g. the second device 130). The term is used broadly to cover any communications between the devices within the first network 115 and outside of the first network 115, independent of which device initiates communication and what kind of information and/or commands is exchanged. For example, the term covers both situations where the devices within the first network 115 use the proxy to actively initiate communication with the devices outside of the local network 115 as well as situations where it is a device outside of the first network 115 that initiate communication with the devices within the first network 115 via the proxy.

As also shown in Fig.1, the system 100 also includes an antivirus service 140. In one embodiment, the router 120 may be communicatively connected to the antivirus service 140 via a third network 145, as shown in Fig.1. In other embodiments, not shown in Fig.1, the router 120 may be connected to the antivirus service 140 either directly, via the first network 115, or via the second network 135. A particular type of connection between the router 120 and the antivirus service 140 can be any connection that can support exchange of information between these two entities in a manner described herein. For example, in an embodiment where the first network 115 comprises a local network, the second network 135 comprises internet, the second device 130 comprises a web server and the first device 110 comprises a device in the local network capable of receiving web content from the web server, The antivirus service 140 is preferably connected to the router either via the second network 135 or the third network 145. However, in an embodiment where the second network 135 comprises a local network, the second device 130 comprises a device in the local network capable of transmitting web content outside of the local network to the first device 110 (which could be any device outside of the local network), the antivirus service 140 is preferably connected to the router either via the first network 115 or the third network 145. In other words, if one of the networks comprises a local network, the antivirus service 140 is preferably not connected to the router 120 via such a network.

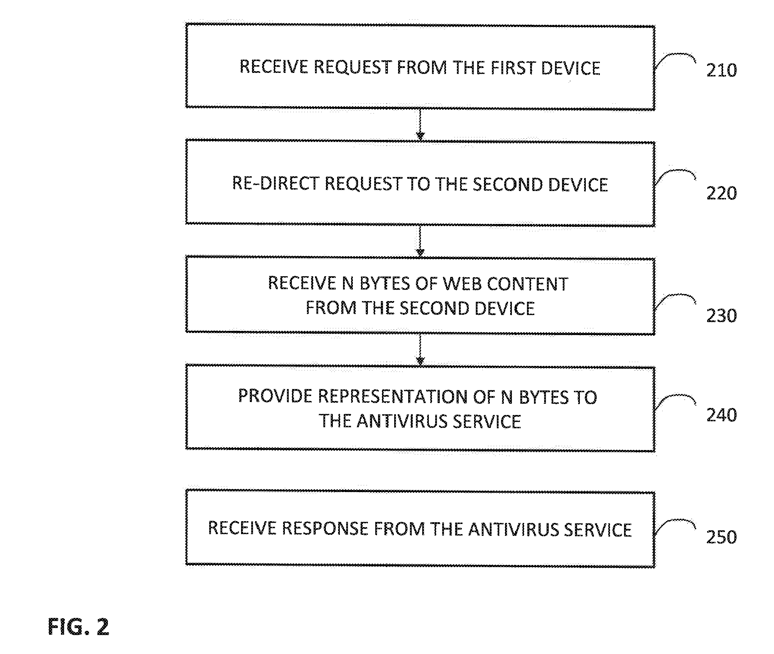

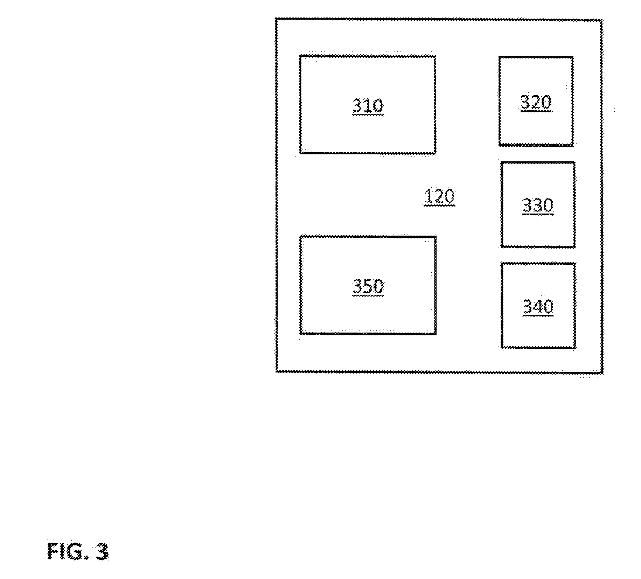

The operation of the system 100 is now described in greater detail with references to Figs.2 and 3.

Fig.2 shows a flow diagram of method steps, to be carried out by the router 120, for enabling detection of malicious web content intended for transmission to the first device 110, according to one embodiment of the present invention. While the method steps are described in conjunction with Figs.1 and 3, persons skilled in the art will recognize that any system configured to perform the method steps, in any order, is within the scope of the present invention.

The illustrative embodiment described in association with Fig.2 is particularly suitable when the first network 115 comprises a local network and the second network 135 comprises internet. In such an embodiment, the first device 110 could be e.g. a home personal computer (PC) comprising a web browser or any other device within the local network capable of receiving web content from the second device 130, which, in this embodiment, would comprise a web server. The router 120 comprises a consumer-based router within the local network, connecting one or more of web-browser-enabled devices within the local, network (devices other than the first device 110 are not shown in Fig.1) to the web server via the internet.

The method begins in step 210, where the router 210 receives, from the first device 110, a request to access a piece of web content available at the second device 120. Such a request may be sent to the router 120 when the user of the web browser (i.e., the first device 110) e.g. clicks on a download link associated with the web content provided by the web server (i.e., the second device 130). The request typically contains a hostname and a URI identifying the location and/or the name of the Internet resource from which the web content may be obtained. As used herein, the term "URI" covers Uniform Resource Locators (URLs), Uniform Resource Names (URNs), or both DRLs and URNs.

In step 220, the router 120 re-directs the request to the second device 130 and, in response to the request, in step 230, starts receiving a stream of web content.

Steps 210, 220, and 230 may be implemented in a manner known in the art, as they mostly relate to the conventional functionality of consumer-grade routers. However, while conventional routers simply act as a gateway for all the traffic flowing between the web browsers and web servers, the router 120 is configured to obtain, after step 230, a representation of N bits of the received web content which can serve as a fingerprint identifying the web content for the purposes of determining whether or not the web content may comprise malware.

In a preferred embodiment, the representation of N bits of web content comprises a hash of the first N bits (e.g., the first 64 kilobytes) of the web content. To that end, the router 120 may be configured to buffer the first N bits of the web content received from the second device 130 in response to the request from the first device 110 and derive a hash of the buffered bytes. Any type of fingerprinting function can be used to derive a representation of the N bits, such as e.g. SHA1.

In general, any type of fingerprinting function F which, for the sufficient number N of bits, has the property that the probability P(F(x) = F(y), × ≠ y) ≈ 0 may be used to derive the fingerprint of the N bits of the web content.

In step 240, the router 120 is configured to provide the obtained fingerprint to the antivirus service 140. The antivirus service 140, which could comprise a cloud-based remote server or multiple servers, includes a large database of known fingerprints and associated classifications indicating whether the web content identified by each fingerprint is "good" (i.e., it seems to not contain malware) or "bad" (i.e., it seems to contain malware). Of course, the antivirus service 140 may include further classifications and further data that can assist in determining whether web content may contain malware. For example, for some or all of the fingerprints, the antivirus service 140 may include expiration dates indicating that, after the expiration date, the classification of that fingerprint cannot be trusted any longer and that the associated web content should be re-classified.

The antivirus service 140 is configured to compare the received fingerprint with the known fingerprints included in the database of the antivirus service 140 and, in step 250, provide a response to the router 120 indicating that the web content identified by the fingerprint is "good," "bad," or "unknown" (i.e., the fingerprint provided to the antivirus service 140 by the router 120 is not included in the fingerprint database of the antivirus service 140).

In one embodiment, the router 120 may be configured to receive and, optionally, buffer only the N bits used for obtaining a fingerprint of the web content, while the rest of the web content may be obtained at the router 120 after the antivirus service 140 determined that the web content does not comprise malware. This embodiment could be particularly useful since it could prevent the needless transmission of malicious content from the web server to the router (and, in addition, to the first device 110).

In another embodiment, the router 120 may be configured to receive and, optionally, buffer the entire web content received from the second device 130 independent of (possibly in parallel with) the antivirus service 140 determining whether the web content may comprise malware. This embodiment could be useful in any situation where a data stream, such as e.g. UDP traffic, cannot be paused.

Independent of whether the router 120 receives only a portion or all of the requested web content and independent of whether the router 120 buffers any portion of the received response, in various embodiments, the N or more bytes of the web content received by the router 120 may be transmitted, by the router 120, to the first device 110 without waiting for a reply from the antivirus service regarding whether or not the web content may comprise malware. Such situations may occur when e.g. the antivirus service 140 is unavailable (thus, all traffic is allowed to go to the first device 110 until the antivirus service 140 is available again), or when responses from the antivirus service 140 are used for e.g. statistical analysis (i.e., the antivirus service 140 is used e.g. as a reporting service merely reporting the presence of malicious content), as opposed to the responses being used for blocking malicious web content from being transmitted from the router 120 to the first device 110.

In a preferred embodiment, however, the router 120 would not transmit the received web content to the first device 110 before receiving an indication from the antivirus service 140 that the web content does not seem to comprise malware.

When the fingerprint is unknown to the antivirus service 140, the antivirus service 140 may request further information from the router 120. In one embodiment, the antivirus service 140 may request a hostname and/or a URI of the request for the web content provided by the first device. The antivirus service 140 may then download some of or all of the web content indicated by the hostname and/or URI and run one or more antivirus packages on the downloaded content to determine whether it may comprise malware.

Receiving only the hostname as opposed to receiving also the URI, allows the antivirus service 140 to provide coarse versus fine classification of web content. For example, the antivirus service 140 may classify the entire host as "bad" (coarse classification) or only classify that the particular URI is "bad" (fine classification).

The antivirus service 140 may then provide a response to the router 120 indicating whether the web content is "good" or "bad." The antivirus service 140 may also add the previously unknown fingerprint to its database. In this manner, the database of the antivirus service 140 is constantly being built and expanded based on the requests received from various devices.

Once the router 120 received the classification from the antivirus service 140 indicating whether the requested web content may comprise malware, the router 120 may block transmission of the web content to the first device 110 if the antivirus service 140 indicates that the web content may comprise malware. Instead, the router 120 may, optionally, transmit a message to the first device 110 indicating that the request has been blocked. If, however, the antivirus service 140 indicates to the router 120 that the web content seems to not comprise malware, the router 120 may transmit the web content to the first device 110.

The above-described method of determining whether the web content may comprise malware by checking only a fingerprint of the web content against a database of fingerprints in the antivirus service 140 provides several advantages over currently employed methods for virus scanning. One advantage is that the determination may be performed without having to download the entire web content, resulting in the improved network performance, since performing or finishing virus scanning only after the whole web content has been downloaded, as is done in the prior art, slows down the first network 115. Generation and transmission of the fingerprint of N bits of the web content to the antivirus service 140 requires minimal resources in terms of processing power and memory and, therefore, can be implemented in a simple consumer-grade router, while taking advantage of large memory and processing capabilities of the remote antivirus service. Another advantage of the proposed method is that neither the router 120 nor the first device 110 need to be concerned with daily virus signature updates as such updates can be implemented in the remote antivirus service. Further, virus scanning in the first network 115 is not limited to one antivirus technology and/or one vendor and each of its signatures. Yet another advantage is that employing the remote antivirus service does not require end-user knowledge of the physical location and configuration of the system that delivers the antivirus service and that only minimal firmware upgrades are necessary for the router within a local network, as the updates can be implemented via changes to the remote antivirus service. In this manner, a typically low cost and resource-limited consumer-grade home router may be converted into an all-inclusive security product that has the ability to perform multiple security functions previously only available in relatively expensive business appliances. Such a router may e.g. require less than 8 megabytes of memory and reach a throughput of 50 megabit per second on a 400 megahertz MIPS microprocessor. In addition, embodiments of the invention can be used to provide a low cost secure internet gateway that protects all devices in a local network without having to install antivirus software on each local networked device individually.

In order to further improve functionality within the system 100, optional embodiments described below may also be implemented.

In an embodiment, the router 120 may further be configured to store, at least for some predetermined period of time, the requests received from the first device 110 and the associated response received from the antivirus service 140. Such an embodiment could help reduce the number of calls to the antivirus service 140 as the router 120 may be configured to first check whether the router 120 already has a response for the most recent request. If e.g., upon receiving a new request from the first device 110, the router 120 determines that request containing the same URI (or the same hostname, again, depending on the desired level of granularity) has previously been made by the first device 110 and that the response from the antivirus service 140 is stored at the router 120, the router may just use the stored response without consulting the antivirus service 140 to make a new determination on the same web content.

In an embodiment, the router 120 and the antivirus service 140 may be configured to communicate using UDP. While this protocol may lack reliability and data integrity compared with e.g. Transmission Control Protocol (TCP), TCP requires too much overhead which would slow down network performance while UDP is sufficient for the purpose of exchanging the types of messages described above.

To improve latency, performance and failover, the antivirus service 140 may use AES hardware acceleration and Network Load Balancing. Furthermore, spreading the antivirus service 140 geographically may improve latency.

Further, in various embodiments, data packets communicated between the router 120 and the antivirus service 140 may be encrypted, authenticated, or both encrypted and authenticated to minimize or prevent packet spoofing and eavesdropping.

As described above, to keep the costs per router as low as possible, resources in terms of memory and processing power are scarce on a home router. Therefore, to efficiently make use of the available resources, the proxy server within the router 120 may use one or more of the techniques of single threading, asynchronous network programming, and using fixed number of memory chunks to handle traffic.

Low cost home routers are equipped with a single core processor. Introducing multithreading on a single core processor will cause the processor to switch between different threads (time-division multiplexing). A multithreaded application would need more stack memory and additional libraries (like pthread), which consequently increases memory usage and footprint. To efficiently make use of the available resources, the proxy implemented in the router 120 is therefore single threaded.

Being single threaded requires asynchronous network programming, like overlapped I/O, completion ports, epoll or iptables QUEUE callbacks.

The proxy in the router 120 preferably uses a fixed number of memory chunks to move traffic from input to output. The handover of chunks is performed without a copy of the data (reduces CPU load). A chunk scheduler is needed to handle out-of-chunk scenarios so that proxy connections can wait on a chunk to become available (a chunk becomes available when it is being released by a different connection).

Furthermore, modern web browsers use HTTP-pipelining and connection pre-allocation to improve page loading latency. Therefore, the proxy in the router 120 preferably supports these techniques so that the end user experience would not suffer. Since HTTP-pipelining and connection pre-allocation consume resources as state is maintained for each connection, proxy timeouts may be implemented to close the connections that are no longer used.

Similar teachings as the ones disclosed above may also apply in a situation where a device in the local network may send out, perhaps unknowingly to the user, malicious content to the devices outside of the local network. This could happen if e.g. the device in the local network is infected with a virus that may generate and send out malware. Steps 230 through 250 described above can also apply to a situation where the second network 135 comprises a local network, the first network 115 comprises an external network connecting the router to an external device (the first device 110). In such an embodiment, the second device 130 could be e.g. a home PC capable of transmitting web content to the first device 110 and the antivirus service 140 would preferably be connected to the router either via the first network 115, the third network 145, but not via the second network 135. By applying the appropriate teachings provided above (i.e., substantially all of the teachings except the ones relating to the first device 110 providing a request for the web content, since, in this illustrative situation, web content is provided by the second device 130 without any request from the first device 110), the router 120 may be configured to check and, possibly, block malicious web content sent out by the second device 130.

As shown in Fig.3, in one embodiment, the router 120 includes a processor 310 (which could include one or more processing modules), a first network interface 320 for connecting to the first network 115, a second network interface 330 for connecting to the second network 135, and a third network interface 340 for connecting to the third network 145. The router 120 also includes a data storage unit 350. Such a router could be configured to implement one or more features described above. More specifically, the above-described operations may be performed in the processor 310, any data may be stored in the data storage unit 350, the first network interface 320 may be used to facilitate exchange of data between the router 120 and the first device 110 over the first network 115, the second network interface 330 may be used to facilitate exchange of data between the router 120 and the second device 130 over the second network 135, and the third network interface 340 may be used to facilitate exchange of data between the router 120 and the antivirus service 140 over the third network 145. In various embodiments, one or more of the first, second, and third network interfaces 320, 330, 340 may be included within a single network interface.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of non-transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory or flash memory) on which alterable information is stored. Moreover, the invention is not limited to the embodiments described above, which may be varied within the scope of the accompanying claims.

## Claims

1. In an environment comprising at least a first device adapted to be communicatively connected to a routing device over a first network and a second device adapted to be communicatively connected to the routing device over a second network, the routing device adapted to be communicatively connected to an antivirus service, a method for determining whether web content intended for transmission between the first device and the second device via the routing device may comprise malware, the method comprising:
receiving, at the routing device, at least a part of web content from the second device;
providing, by the routing device, to the antivirus service, at least a representation of N bits of the received part of the web content; and
receiving, at the routing device, from the antivirus service, test information indicating whether the web content may comprise malware,
wherein the test information is based on the representation of the N bits provided by the routing device.

2. The method according to claim 1, wherein:
when the test information indicates that the web content does not comprise malware, the method further comprises the routing device transmitting the web content to the first device, and
when the test information indicates that the web content may comprise malware, the method further comprises blocking transmission of the web content to the first device.

3. The method according to one or more of preceding claims, wherein the representation of the N bits comprises a representation or the first N bits of the received part of the web content and/or wherein the representation or the N bits comprises a hash of the N bits.

4. The method according to one or more of the preceding claims, further comprising buffering the N bits of the received part of the web content at the routing device.

5. The method according to one or more of preceding claims, wherein the representation of the N bits is provided to the antivirus service and/or the test is received from the antivirus service using User Datagram Protocol.

6. The method according to one or more of the preceding claims, wherein the representation of the N bits is provided to the antivirus service and/or the test information is received from the antivirus service encrypted, authenticated, or both encrypted and authenticated.

7. The method according to one or more of the preceding claims, wherein the routing device is configured to support HTTP-pipelining and connection pre-allocation.

8. The method according to one or more of the preceding claims, the method further comprising, prior to receiving the at least a part of the web content from the second device:
receiving, at the routing device, from the first device, a request for access to the web content provided by the second device, and
re-directing, by the routing device, the request to the second device,
wherein the routing device receives the at least a part of the web content from the second device in response to the routing device re-directing the request to the second device.

9. The method according to claim 8, further comprising providing, by the routing device, to the antivirus service, a first part of the request, such as e.g. a hostname and/or a Uniform Resource Identifier associated with the web content, wherein the test information is further based on the first part of the request provided by the routing device.

10. The method according to claim 9, wherein the test information is established by receiving the web content at the antivirus service and checking the web content against one or more antivirus packages.

11. The method according to one or more of claims 8-10, further comprising storing, at the routing device, at least a part of the request and at least a part of the test information associated with the request.

12. The method according to one or more of the preceding claims, wherein the first network comprises a local network, the second network comprises an external network, the second device comprises a web server, and the first device comprises a device within the local network capable of receiving the web content from the web server and wherein, optionally, when the test information indicates that the web content may comprise malware, the method further comprises providing an indication to the first device that transmission of the web content is blocked.

13. The method according to one or more of claims 1-7, wherein the second network comprises a local network, the first network comprises an external network, and the second device comprises a device within the local network capable of transmitting the web content to the first device and wherein, optionally, when the test information indicates that the web content may comprise malware, the method further comprises providing an indication to the second device that transmission of the web content is blocked.

14. A routing device comprising means configured for carrying out the method according to one or more of the preceding claims.

15. A computer program comprising software code portions configured for, when executed by a processor, performing one or more steps of the method according to one or more of the claims 1-13.
